# EUROPÄISCHE PATENTSCHRIFT

(11) **EP 1 190 561 B1**
(45) Veröffentlichungstag und Bekanntmachung des Hinweises auf die Patenterteilung: **03.11.2004**
(21) Anmeldenummer: 00945586.6
(22) Anmeldetag: 30.05.2000
(51) Int. Cl.: H04M 11/06, H04Q 11/04, H04M 3/00

(54) **KODEC-SCHALTUNG UND VERFAHREN ZUR ERHÖHUNG DER DATENÜBERTRAGUNGSRATE BEI EINER MODEM-ÜBERTRAGUNG**
CODEC CIRCUIT AND METHOD FOR INCREASING THE DATA TRANSMISSION RATE IN A MODEM TRANSMISSION
CIRCUIT CODEC ET PROCEDE POUR AUGMENTER LA VITESSE DE TRANSMISSION DE DONNEES DANS UNE TRANSMISSION PAR MODEM

(30) Priorität: 25.06.1999 DE 19929205
(43) Veröffentlichungstag der Anmeldung: 27.03.2002
(73) Patentinhaber: Infineon Technologies AG, 81669 München (DE)
(72) Erfinder: HÖFER, Gerald, D-86853 Langerringen (DE); WIMÖSTERER, Stephan, D-81541 München (DE); ZOJER, Herbert, A-9500 Villach (AT)
(74) Vertreter: Reinhard - Skuhra - Weise & Partner
(86) Internationale Anmeldenummer: PCT/DE2000/001753
(87) Internationale Veröffentlichungsnummer: WO 2001/001667

(56) Entgegenhaltungen:
- WO-A-99/38351
- WO-A-99/40685
- US-A- 4 788 692
- N. WARKE, M. ALI: "Optimum Codec Companding for High-Speed PCM Data Transmission in Telephone Networks" 1999 IEEE INTERNATIONAL CONFERENCE ON ACOUSTICS, SPEECH, AND SIGNAL PROCESSING. PROCEEDINGS. ICASSP99, März 1999 (1999-03), Seiten 2679-2682, XP002162341 Phoenix, AZ, USA
- HEIGL H P: "CHIPSATZ FUER EINE LOW COST LINECARD" FUNKSCHAU,DE,FRANZIS-VERLAG K.G. MUNCHEN, Bd. 63, Nr. 19, 6. September 1991 (1991-09-06), Seiten 74-78, XP000261120 ISSN: 0016-2841

## Beschreibung

Die Erfindung betrifft eine Kodec-Schaltung und ein Verfahren zur Erhöhung der Datenübertragungsrate eines Modems, bei dem Nachrichten digital pulscodemoduliert übertragen werden.

Eine Kodec-Schaltung ist eine Geräteeinheit, die PCM-Kodierung in abgehender und PCM-Dekodierung in ankommender Richtung durchführt.

N. WARKE, M. ALI: "Optimum Codec Companding For High-Speed PCM Data Transmission in Telephone Networks" 1999 IEEE International Conference on Acoustics, Speech, and Signal Processing, Proceedings, ICASSP99, März 1999, Seiten 2679 bis 2682, XP002162341, Phoenix, AZ, USA, beschreiben für Telefonnetze, die zur Übertragung von Sprachsignalen und für PCM-Datenübertragungen verwendet werden, die Verwendung eines linearen CODEC, der eine lineare Quantisierung der abgetasteten Signale einsetzt, bei PCM-Datenübertragungen mit den Vorteilen einer niedrigeren Symbolfehlerrate (SER) und einer höheren Verbindungsrate, und die Verwendung eines µ-CODEC, der eine nicht-lineare Quantisierung gemäß einer µ-Law-Kompandierungsregel einsetzt, bei der Übertragung von Sprachsignalen, die eher Amplitudenwerte nahe 0 als bei den zugelassenen extremen Spitzenwerten aufweisen, um den Quantisierungsfehler zu reduzieren. Es ist ferner die Erfassung eines Sprachband-Modems durch einen pseudozufälligen Code in einem µ-CODEC beschrieben, um zu einer linearen Kompandierungscharakteristik umzuschalten.

Die US-A-4 788 692 beschreibt ein adaptives differenzielles Pulscodemodulationssystem (ADPCM), das einen adaptiven Quantisierer und einen adaptiven Prädiktor, die jeweils zwischen einem modemoptimierten Zustand mit einer Codiercharakteristik, die für ein Sprachsignal optimiert ist, und einem Zustand mit einer Codiercharakteristik, die für ein Sprachband-Modemssignal optimiert ist, schaltbar sind, und einen Modem-Trainingssignal-Detektor, der den adaptiven Quantisierer und den adaptiven Prädiktor in den modemoptimierten Zustand schaltet, wenn derselbe ein Modem-Trainingssignal mit einer bestimmten Frequenz erfasst, aufweist. Der adaptive Prädiktor ist aus Verzögerungselementen mit variablen und festen Prädiktionskoeffizienten gebildet und weist eine Koeffizientenerzeugungslogik auf.

Pulscodemodulation (PCM) ist ein Zeitmultiplexsystem, das Mehrfachübertragung auf einem Leitungsweg ermöglicht. PCM-Systeme werden in Digitaltechnik aufgebaut und betrieben. Sie bieten eine bessere Übertragungsgüte als vergleichbare analoge Systeme. PCM-Systeme können für Kabelleitungen verwendet werden, die für den Trägerfrequenzbetrieb nicht geeignet sind. Mehradrige Kabel lassen sich im Zeitmultiplexverfahren voll ausnutzen. Ein Nachteil von PCM-Systemen liegt in der Vergrößerung der erforderlichen Bandbreite, die das codemodulierte Signal gegenüber anderen Signalarten hat. Bei der Signalübertragung werden auf der Sendeseite die ankommenden Signale im Frequenzband auf 3,4 kHz begrenzt, abgetastet, quantisiert und dem Kodierer zugeführt, der für die aufeinanderfolgenden Amplitudenwerte die zugehörigen Codewörter bildet, die vom Sende- zum Empfangsort übertragen werden. Am Empfangsort werden die übertragenen Signale dekodiert und in ein pulsamplitudenmoduliertes Signal überführt und demoduliert.

Modems sind Geräte zur Übertragung von Datensignalen über Fernsprechkanäle mittels Modulation. Bei bisherigen Kodec-Schaltungen nach dem Stand der Technik erfolgte die PCM-Kodierung in abgehender und PCM-Dekodierung in ankommender Richtung unabhängig davon, ob die zu kodierenden Signale gewöhnliche Sprechsignale von einem Telefonapparat oder von einem Modem stammen. Die Übertragungseigenschaften von bekannten Kodec-Schaltungen sind bei der Kodierung von Telefon- und Modemsignalen gleich. Dies hat zur Folge, dass die Datenübertragung von Modemsignalen in der gleichen Frequenzbandbreite geschieht wie die Datenübertragung von Telefon-Sprechsignalen, nämlich innerhalb eines Frequenzbandes, das sich von etwa 100 Hz als untere Grenzfrequenz bis etwa 3,4 kHz als obere Grenzfrequenz erstreckt. Da die Datenübertragungsrate direkt proportional zur Frequenzbandbreite des verwendbaren Frequenzbandes ist, ist die Übertragungsrate bei Kodec-Schaltungen durch das Übertragungs-Frequenzband, das sich von etwa 100 Hz bis 3,4 kHz erstreckt, begrenzt.

Es ist daher die Aufgabe der vorliegenden Erfindung, ein Verfahren und eine Kodec-Schaltung zur Erhöhung der Datenübertragungsrate bei einer Modem-Datenübertragung zu schaffen.

Diese Aufgabe wird erfindungsgemäß durch eine Kodec-Schaltung mit den in Patentanspruch 1 angegebenen Merkmalen sowie durch ein Verfahren zur Erhöhung der Datenübertragungsrate bei einer Modem-Datenübertragung mit den in Patentanspruch 8 angegebenen Merkmalen gelöst.

Weitere vorteilhafte Ausgestaltungen der Erfindung sind in den Unteransprüchen angegeben.

Bei einer vorteilhaften Ausgestaltung der erfindungsgemäßen Kodec-Schaltung sind die programmierbaren digitalen Filter Bandpaß-Filter mit einer unteren Grenzfrequenz und einer oberen Grenzfrequenz.

Die Einstellkoeffizienten der digitalen Umschalt-Filter sind vorzugsweise im zugehörigen Koeffizienten-Speicher abspeicherbar.

Dies bietet den besonderen Vorteil, dass die Übertragungseigenschaften durch Abspeichern anderer Einstellkoeffizienten der digitalen Umschalt-Filter schnell und flexibel an die Übertragungsanforderungen der Modem-Schaltung anpaßbar sind.

Die Koeffizientenspeicher der erfindungsgemäßen Kodec-Schaltung sind vorzugsweise über Einstelleitungen mit einer Koeffizienten-Eingabeeinrichtung verbunden.

Bei einer bevorzugten Ausführungsform der erfindungsgemäßen Kodec-Schaltung sind die digitalen Umschalt-Filter ausgangsseitig an eine Summiereinrichtung angeschlossen.

Die digitalen Umschalt-Filter der erfindungsgemäßen Kodec-Schalter sind vorzugsweise Filter siebter Ordnung.

Bei einer bevorzugten Ausführungsform der erfindungsgemäßen Kodec-Schaltung erkennt die Modem-Signalerkennungseinrichtung ein Modem-Signal durch Erfassung eines Anfangssignaltones mit einer vorbestimmten Signalfrequenz zu Beginn der Modem-Übertragung.

Die Sende- und Empfangssignale, die auf dem Sendesignalpfad und dem Empfangssignalpfad übertragen werden, sind vorzugsweise PCM-Signale.

Im weiteren wird eine bevorzugte Ausführungsform der erfindungsgemäßen Kodec-Schaltung zur Erläuterung erfindungswesentlicher Merkmale unter Bezugnahme auf die beigefügten Zeichnungen beschrieben.

Es zeigen:
Fig. 1 ein Blockdiagramm der erfindungsgemäßen Kodec-Schaltung;
Fig. 2 ein Blockdiagramm der programmierbaren Digitalfilter, die in der in Fig. 1 gezeigten erfindungsgemäßen Kodec-Schaltung enthalten sind;
Fig. 3 ein Ablaufdiagramm des erfindungsgemäßen Verfahrens zur Erhöhung der Datenübertragungsrate bei einer Modem-Datenübertragung gemäß der Erfindung.

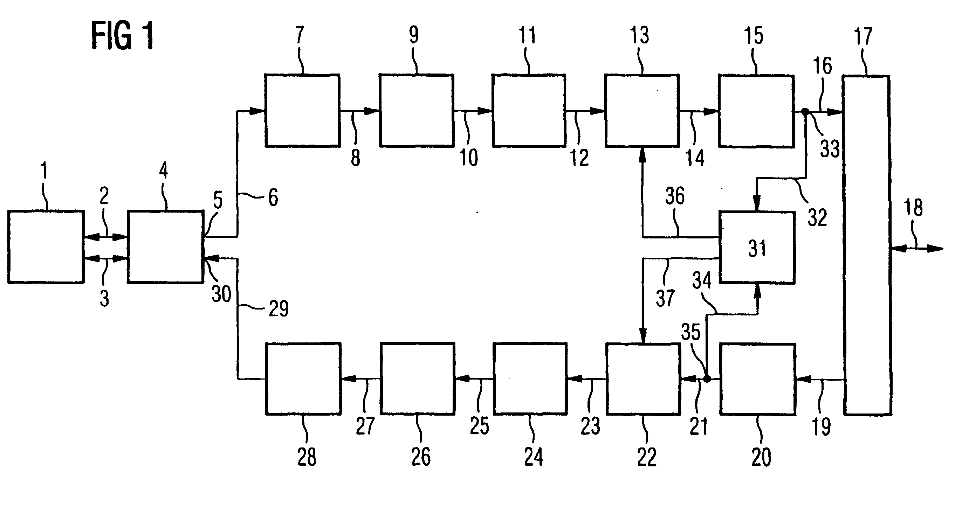

Fig. 1 zeigt ein Blockdiagramm der erfindungsgemäßen Kodec-Schaltung zur Erhöhung der Datenübertragungsrate bei einer Modem-Datenübertragung gemäß der Erfindung.

Ein Telefonapparat 1 ist bidirektional über Anschlußleitungen 2, 3 an eine sogenannte SLIC-Schaltung angeschlossen (SLIC: Subscriber Line Interface Circuit). Die SLIC-Schaltung 4 ist ein integrierter Halbleiterbaustein zur digitalen Vermittlung der die sogenannten Borscht-Funktionen wahrnimmt. Borscht ist ein Kunstwort zur Umschreibung der Funktionen einer Teilnehmerschaltung in einer Vermittlungsstelle. Diese Funktionen bilden mit ihren Anfangsbuchstaben das Wort BORSCHT. Die Funktionen sind im einzelnen Zentralbatteriebetrieb (battery feed), Überspannungsschutz (overvoltage protection), Teilnehmerruf (ringing), Signalisierung (signalling), PCM-Wandlung (coding), Gabelschaltung (hybride) und Testfunktionen (testing).

Die SLIC-Schaltung 4 besitzt einen analogen Signalausgang 5, der über eine Leitung 6 an ein analoges Vorfilter 7 angeschlossen ist. Das analoge Vorfilter 7 ist vorzugsweise ein Tiefpaßfilter. Das analoge Vorfilter 7 gibt die gefilterten Ausgangssignale über eine Leitung 8 an einen Analog/Digitalwandler 9 ab. Der Analog/Digitalwandler 9 tastet das empfangene analoge Signal vorzugsweise mit einer Abtasterate von 4 MHz ab. Das durch den Analog/Digitalwandler 9 erzeugte digitale Abtastsignal gelangt über eine Leitung 10 zu einem digitalen Filter 11. Das digitale Filter 11 ist vorzugsweise ein digitales Tiefpaßfilter, dessen Filtereigenschaften fest eingestellt sind. Das Ausgangssignal des digitalen Filters 11 wird über eine Leitung 12 an ein programmierbares digitales Filter 13 übertragen. Die Filtereigenschaften des programmierbaren digitalen Filters 13 sind nicht fest eingestellt sondern können eingestellt bzw. umgeschaltet werden. Das programmierbare digitale Filter 13 ist ausgangsseitig über eine Leitung 14 an eine PCM-Kodiereinrichtung 15 angeschlossen. Die PCM-Kodiereinrichtung 15 kodiert das über die Leitung 14 empfangene gefilterte Signal zu einem PCM-Sendesigal, das über die Leitung 16 an ein PCM-Interface 17 abgegeben wird.

Das PCM-Signal-Interface 17 sendet und empfängt kodierte PCM-Signale mit einer Datenübertragungsrate von vorzugsweise 64 kBit pro Sekunde. Dabei ist das PCM-Signal vorzugsweise als ein achtstelliges PCM-Codewort kodiert. Die durch das PCM-Signal-Interface gesendeten PCM-Signale und die empfangenen PCM-Signale werden durch eine PCM-Signal-Übertragungsleitung 18 gesendet und empfangen. Die durch das PCM-Signal-Interface empfangenen PCM-Signale werden über eine Leitung 19 an eine PCM-Dekodiereinrichtung 20 geleitet.

Die PCM-Dekodiereinrichtung 20 dekodiert das empfangene PCM-Signal und gibt es über eine Leitung 21 an ein weiteres programmierbares digitales Filter 22 ab. Das programmierbare digitale Filter 22 ist in seinem Aufbau ähnlich zu dem programmierbaren digitalen Filter 13, wobei die Filtereigenschaften einstellbar bzw. umschaltbar sind. Das programmierbare digitale Filter 22 filtert das empfangene dekodierte PCM-Empfangssignal und gibt es ausgangsseitig über eine Leitung 23 an ein digitales Filter 24 gefiltert ab. Die Filtereigenschaften des digitalen Filters 24 sind fest eingestellt, d.h. das digitale Filter 24 ist nicht programmierbar. Vorzugsweise ist das digitale Filter 24 ein digitales Tiefpaßfilter. Das digitale Filter 24 ist über eine Leitung 25 mit einem Digital/Analogwandler 26 verbunden. Der Digital/Analogwandler 26 wandelt das empfangene gefilterte digitale Signal in ein Analogsignal um, das über eine Leitung 27 einem analogen Nachfilter, vorzugsweise einem analogen Tiefpaßfilter, 28 zugeführt wird. Das analoge Nachfilter 28 legt das dekodierte gefilterte analoge PCM-Signal über eine Leitung 29 an den analogen Signaleingang 30 der SLIC-Schaltung an.

Die in Fig. 1 gezeigte erfindungsgemäße Kodec-Schaltung weist zusätzlich eine Modem-Signal-Erkennungseinrichtung 31 auf. Die Modem-Signal-Erkennungseinrichtung ist in dem Fig. 1 gezeigten Beispiel über eine Erfassungsleitung 32 an einem Abzweigungsknoten 33 an die Sendesignalleitung 16 angeschlossen. Des weiteren ist die Modem-Signal-Erkennungseinrichtung 31 über eine weitere Erfassungsleitung 34 an einem Abzweigungsknoten 35 an der Ausgangsleitung 21 der PCM-Dekodiereinrichtung 20 angeschlossen. Die Modem-Signal-Erkennungseinrichtung 31 steuert über Steuerleitungen 36, 37 die beiden programmierbaren Filter 13, 22. Über die Erfassungsleitungen 32, 34 erfaßt die Modem-Signal-Erkennungseinrichtung 31 der erfindungsgemäßen Kodec-Schaltung, ob das in der Sendesignalleitung 16 abgegebene Sendesignal oder das in der Empfangssignalleitung 21 empfangene Empfangssignal ein Modem-Signal ist. Die Erfassungsleitungen 32, 34 der Modem-Signal-Erkennungseinrichtung 31 können das Sendesignal an einer beliebigen Stelle im Sendesignalpfad und das Empfangssignal an einer beliebigen Stelle im Empfangssignalpfad der Kodec-Schaltung abzweigen. Beispielsweise kann der in Fig. 1 gezeigte Abzweigungspunkt 33 das Sendesignal an der Ausgangsseite des Analog/Digitalwandlers 9 zur Modem-Signal-Erkennung liegen. Ein Modem-Signal wird erfaßt, wenn der in Fig. 1 gezeigte Telefonapparat 1 auf ein Modem zur Abgabe eines Modem-Datensignals umgeschaltet wird oder über die Leitung 18 von einem entfernt gelegenen Modem ein Modem-Signal empfangen wird. Die Modem-Signal-Erkennungseinrichtung 31 erfaßt dabei vorzugsweise ein Modem-Signal durch Erkennung eines Modem-Anfangssignaltons mit einer vorbestimmten Signalfrequenz, der zu Beginn einer jeden Modem-Übertragung auftritt.

Sobald die Modem-Signal-Erkennungseinrichtung 31 ein Modem-Signal auf dem Sendesignalpfad oder dem Empfangssignalpfad der erfindungsgemäßen Kodec-Schaltung erkennt, schaltet sie das programmierbare digitale Filter 13 sowie das programmierbare digitale Filter 22 über die Steuerleitungen 36, 37 auf eine verbreiterte Filter-Bandbreite um.

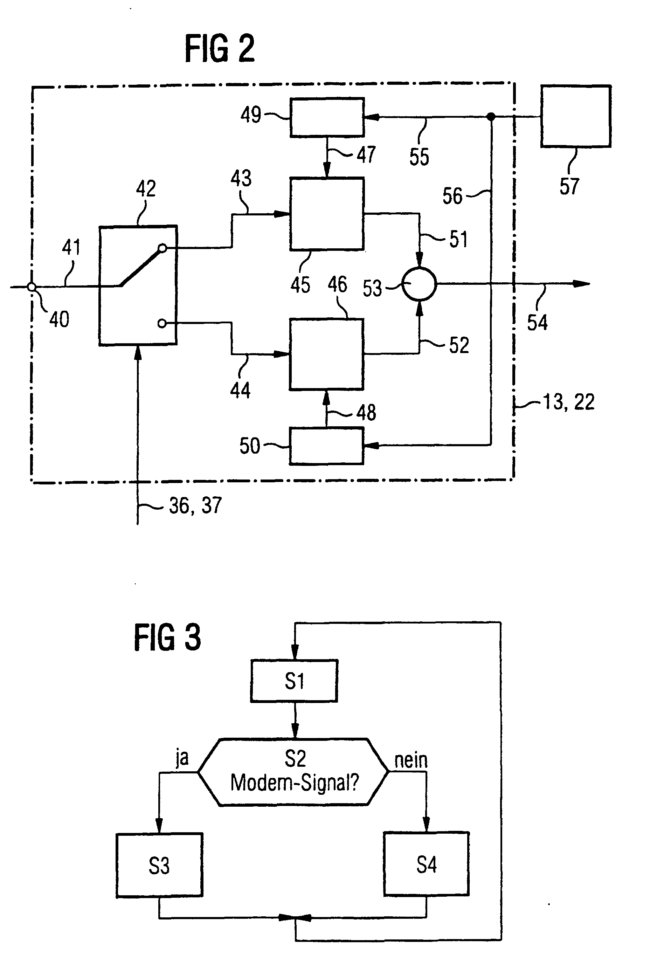

Fig. 2 zeigt den inneren Aufbau der beiden in Fig. 1 dargestellten programmierbaren digitalen Filter 13, 22.

Die programmierbaren digitalen Filter 13 bzw. 22 weisen einen Eingangssignalanschluß 40 auf, der über eine interne Eingangsleitung 41 an eine steuerbare Schalteinrichtung 42 angeschlossen ist. Die steuerbare Schalteinrichtung 42 schaltet die Eingangsleitung 41 in Abhängigkeit von einem auf der Steuerleitung 36 bzw. 37 anliegenden Steuerbefehl zwischen einer Leitung 43 und einer Leitung 44 um. Die interne Leitung 43 des programmierbaren digitalen Filters verbindet die Eingangsleitung 41 mit einem internen digitalen Umschaltfilter 45 und die interne Leitung 44 verbindet die Eingangsleitung 41 mit einem weiteren digitalen Umschaltfilter 46. Die digitalen Umschaltfilter 45 und 46 sind jeweils über Einstelleitungen 47, 48 an interne Speichereinrichtungen 49, 50 angeschlossen. Die digitalen Umschaltfilter 45, 46 filtern die an den internen Leitungen 43, 44 anliegenden digitalen Eingangssignale und führen sie über Leitungen 51, 52 auf ein Summationsglied 53, das die durch die Umschaltfilter 45, 46 gefilterten Signale über die Ausgangsleitung 54 abgibt. Die Ausgangsleitung 54 in Fig. 2 entspricht bei dem in Fig. 1 gezeigten programmierbaren digitalen Filter 13 der Ausgangsleitung 14 und bei dem programmierbaren digitalen Filter 22 der Ausgangsleitung 23.

Die internen Speichereinrichtungen 49, 50 des programmierbaren digitalen Filters 13, 22 sind über Einstelleitungen 55, 56 mit einer Koeffizienten-Eingabeeinrichtung 57 verbunden. Die Einstellkoeffizienten der digitalen Umschalt-Filter 45, 46 sind in den internen Speichereinrichtungen 49, 50 abspeicherbar. Diese abgespeicherten Einstellkoeffizienten der digitalen Umschalt-Filter 45, 46 können durch die Koeffizienten-Eingabeeinrichtung 57 über die Einstelleitungen 55, 56 entsprechend den Übertragungsanforderungen umprogrammiert bzw. neu eingestellt werden.

Das digitale Umschalt-Filter 45 ist vorzugsweise ein digitales Bandpaßfilter mit einer unteren und einer oberen Grenzfrequenz. Dabei beträgt die untere Grenzfrequenz etwa 100 bis 200 Hz und die obere Grenzfrequenz 3,4 kHz. Das Umschalt-Filter 46 ist vorzugsweise ein digitales Bandpaßfilter mit einer unteren und oberen Grenzfrequenz, wobei die untere Grenzfrequenz etwa 100 bis 200 Hz beträgt, und die obere Grenzfrequenz etwa 4 kHz ist.

Die Frequenz-Bandbreite des digitalen Umschalt-Filters 46 ist stets höher als die Filter-Bandbreite des digitalen Umschaltfilters 45 und erlaubt somit eine höhere Datenübertragungsrate.

Wenn die, wie in Fig. 1 dargestellt, ein normales Telefongespräch von dem Telefonapparat 1 zu einem entfernt gelegenen anderen Telefonapparat geführt wird, ist die steuerbare Schalteinrichtung 42 der in Fig. 2 dargestellten programmierbaren digitalen Filter 13, 22 derart geschaltet, daß die Eingangsleitung 41 mit der internen Leitung 43 verbunden ist. In dieser Schaltstellung wird das Telefongesprächssignal über das digitale Umschalt-Filter 45 mit der normalen geringen Filterbandbreite von beispielsweise 3,4 kHz geführt. Erkennt umgekehrt die in Fig. 1 gezeigte Modem-Signal Erkennungseinrichtung 31 beispielsweise an einem Modem-Anfangssignalton zu Beginn der Modem-Übertragung, dass das übertragene Signal ein Modem-Signal und kein gewöhnliches Telefongesprächssignal ist, gibt die Modem-Signal-Erkennungseinrichtung über die Steuerleitungen 36, 37 ein Steuersignal an die in Fig. 2 dargestellten programmierbaren digitalen Filter 13, 22 ab. Diese Steuersignale steuern die steuerbare Schalteinrichtung 42 derart, dass die Eingangssignalleitung 41 auf die interne Leitung 44 geschaltet wird. Das erkannte Modem-Signal wird so über das digitale Umschalt-Filter 46 mit der erhöhten Filter-Bandbreite von beispielsweise 4 kHz geführt.

Ist das PCM-Signal in 8 Bit umfassende Codewörter kodiert und beträgt die Übertragungsrate 64 kBit pro Sekunde, ergibt sich eine Abtastrate von 8 kHz und somit eine maximale Bandbreite von 4 kHz.

Die bei Erkennung eines Modem-Signals durchgeführte Umschaltung von einem digitalen Filter 45 mit geringerer Filter-Bandbreite auf einen digitalen Filter 46 mit einer erhöhten Filter-Bandbreite bewirkt, daß die Übertragungsrate von Modem-Datensignalen erheblich gesteigert werden kann.

In Fig. 2 gezeigte bevorzugte Ausführungsform der digital programmierbaren Filter 13, 22 besitzt zwei interne digitale Umschalt-Filter 45, 46. Bei alternativen Ausführungsformen weisen die programmierbaren digitalen Filter 13, 22 der erfindungsgemäßen Kodec-Schaltung nicht nur zwei digitale Umschalt-Filter 45, 46 sondern eine Vielzahl von internen digitalen Umschalt-Filtern auf. So wird es möglich, die Übertragungseigenschaften der erfindungsgemäßen Kodec-Schaltung auch in Abhängigkeit davon anzupassen, von welchem Modem das Modem-Signal stammt. Hierzu erkennt die Modem-Signal-Erkennungseinrichtung 31 der erfindungsgemäßen Kodec-Schaltung nicht nur, ob ein Modem-Signal vorliegt oder nicht, sondern auch von welcher Art von Modem das Modem-Signal stammt und steuert entsprechend die programmierbaren digitalen Filter.

Fig. 3 zeigt ein Ablaufdiagramm zur Darstellung des erfindungsgemäßen Verfahrens zur Erhöhung der Daten-Übertragungsrate bei einer Modem-Übertragung. In einem Schritt S1 wird das von der Kodec-Schaltung im Sendesignalpfad gesendete Sendesignal und das im Empfangssignalpfad empfangene Empfangssignal, bei dem es sich vorzugsweise um ein PCM-Signal handelt, erfaßt.

Im Schritt S2 wird das erfaßte Signal ausgewertet und beispielsweise mittels eines vordefinierten Modem-Anfangstones zu Beginn einer jeden Modem-Daten-Übertragung erkannt, ob die erfaßten PCM-Signale gewöhnliche Telefonsignale sind, oder ob es sich um Modem-Signale handelt.

Falls ein Modem-Signal erkannt wird, werden bei Schritt S3 die beiden in Fig. 1 dargestellten Filter 13, 22 derart geschaltet, dass sich ihre Filter-Bandbreite erhöht.

Falls im Schritt S2 umgekehrt erkannt wird, dass kein Modem-Signal vorliegt, werden bei Schritt S4 die beiden in Fig. 1 dargestellten programmierbaren digitalen Filter 13, 22 derart geschaltet, daß sie die normale Telefongesprächs-Filter-Bandbreite besitzen.

Zur Erhöhung der Filter-Bandbreite der programmierbaren digitalen Filter 13, 22 wird bei Schritt S3 die umschaltbare Steuereinrichtung 42 auf den digitalen Umschalt-Filter 46 mit erhöhter Filter-Bandbreite geschaltet.

Die erfindungsgemäße Kodec-Schaltung sowie das erfindungsgemäße Verfahren zur Erhöhung der Daten-Übertragungsrate bei einer Modem-Daten-Übertragung gestattet bei einer Sprachsignalverbindung die Einhaltung von Spezifikationen und damit eine hohe Qualität der Sprachverbindung und weist gleichzeitig optimierte Betriebseigenschaften bei einer Modem-Datensignal-Übertragung auf. Die für eine Modem-Datensignal-Übertragung optimierten Betriebseigenschaften würden bei einer gewöhnlichen Telefonsprachverbindung die gesetzten Spezifikationen verletzen und werden daher nur bei der Modem-Datensignal-Übertragung eingesetzt.

Hierzu werden bei der erfindungsgemäßen Kodec-Schaltung die Filterstrukturen erweitert, wobei die Filtereigenschaften zusätzlich frei programmierbar bzw. einstellbar sind.

## Patentansprüche

1. Kodec-Schaltung zur Erhöhung der Daten-Übertragungsrate bei einer Modem-Übertragung mit
(a) einem Sendesignalpfad;
(b) einem Empfangssignalpfad;
(c) und mit einer Modem-Signal-Erkennungseinrichtung (31) zur Erkennung, ob ein in dem Sendesignalpfad abgegebenes Sendesignal oder ein in dem Empfangssignalpfad empfangenes Empfangssignal ein Modem-Signal ist,
**dadurch gekennzeichnet, dass**
(d) ein programmierbares digitales Sendefilter (13) in dem Sendesignalpfad der Kodec-Schaltung vorgesehenen ist;
(e) ein programmierbares digitales Empfangsfilter (22) in dem Empfangssignalpfad der Kodec-Schaltung vorgesehenen ist;
(f) die programmierbaren digitalen Filter (13, 22) jeweils ein erstes digitales Umschalt-Filter (45) mit geringer Filterbandbreite und eine Vielzahl von digitalen Umschalt-Filtern (46) mit erhöhter Filterbandbreite enthalten; und
(g) die Modem-Signal-Erkennungseinrichtung (31) derart ausgeführt ist, dass sie bei Erkennung eines Modem-Signals die programmierbaren digitalen Filter (13, 22) mittels einer steuerbaren Schalteinrichtung (42) von dem ersten digitalen Umschalt-Filter (45) mit geringer Filterbandbreite auf ein digitales Umschalt-Filter der Vielzahl von digitalen Umschalt-Filtern (46) mit erhöhter Filterbandbreite abhängig davon umschaltet, von welcher Art von Modem das Modem-Signal stammt.

2. Kodec-Schaltung nach Anspruch 1,
**dadurch gekennzeichnet,**
**dass** die programmierbaren digitalen Filter (13, 22) Bandpass-Filter mit einer unteren Grenzfrequenz und einer oberen Grenzfrequenz sind.

3. Kodec-Schaltung nach Anspruch 1 oder 2,
**dadurch gekennzeichnet,**
**dass** Einstellkoeffizienten der digitalen Umschalt-Filter (45, 46) in zugehörigen Koeffizientenspeichern (49, 50) abspeicherbar sind.

4. Kodec-Schaltung nach Anspruch 3,
**dadurch gekennzeichnet,**
**dass** die Koeffizientenspeicher über Einstelleitungen (55, 56) mit einer Koeffizienten-Eingabeeinrichtung (57) verbunden sind.

5. Kodec-Schaltung nach einem der vorangehenden Ansprüche 1 bis 4,
**dadurch** gekennnzeichnet,
dass die digitalen Umschalt-Filter (45, 46) ausgangsseitig an eine Summiereinrichtung (53) angeschlossen sind.

6. Kodec-Schaltung nach einem der vorangehenden Ansprüche 1 bis 5,
**dadurch gekennzeichnet,**
**dass** die digitalen Umschalt-Filter (45, 46) Filter siebter Ordnung sind.

7. Kodec-Schaltung nach einem der vorangehenden Ansprüche 1 bis 6,
**dadurch gekennzeichnet,**
**dass** das Sende- und Empfangssignal ein PCM-Signal ist.

8. Verfahren zur Erhöhung der Daten-Übertragungsrate bei einer Modem-Daten-Übertragung mit den folgenden Schritten:
a) Erfassen der von einer Kodec-Schaltung in einem Sendesignalpfad gesendeten oder in einem Empfangssignalpfad empfangenen Signale;
b) Erkennen, ob die erfassten Signale Modem-Signale sind,
**dadurch gekennzeichnet,**
**dass**
c) die Filter-Bandbreiten von digitalen Filtern, die in dem Sende- und Empfangssignalpfad der Kodec-Schaltung vorgesehen sind, erhöht werden, wenn die erfassten Signale als Modem-Signale erkannt werden, und abhängig davon erhöht werden, von welcher Art von Modem das Modem-Signal stammt.

9. Verfahren nach Anspruch 8,
**dadurch gekennzeichnet,**
**dass** eine Modem-Signal-Erkennungseinrichtung (31) ein Modem-Signal durch Erfassen eines Anfangssignaltons mit einer vorbestimmten Signalfrequenz zu Beginn der Modem-Übertragung erkennt.

## Claims

1. Codec circuit for increasing the data transmission rate in a modem transmission having
(a) a transmission signal path;
(b) a reception signal path;
(c) and having a modem signal detection device (31) for detecting whether a transmission signal which is output on the transmission signal path or a reception signal which is received on the reception signal path is a modem signal,
**characterized in that**
(d) a programmable digital transmission filter (13) is provided in the transmission signal path of the Codec circuit;
(e) a programmable digital reception filter (22) is provided in the reception signal path of the Codec circuit;
(f) the programmable digital filters (13, 22) each contain a first digital switchover filter (45) with a small filter bandwidth and a plurality of digital switchover filters (46) with an increased filter bandwidth; and
(g) the modem signal detection device (31) is embodied in such a way that, when a modem signal is detected, the programmable digital filters (13, 22) are switched over, by means of a controllable switching device (42), from the first digital switchover filter (45) with a small filter bandwidth to a digital switchover filter of the plurality of digital switchover filters (46) with an increased filter bandwidth, as a function of the type of modem from which the modem signal originates.

2. Codec circuit according to Claim 1, **characterized in that** the programmable digital filters (13, 22) are bandpass filters with a lower limiting frequency and an upper limiting frequency.

3. Codec circuit according to Claim 2, **characterized in that** setting coefficients of the digital switchover filters (45, 46) can be stored in associated coefficient memories (49, 50).

4. Codec circuit according to Claim 3, **characterized in that** the coefficient memories are connected to a coefficient input device (57) via setting lines (55, 56).

5. Codec circuit according to one of the preceding Claims 1 to 4, **characterized in that** the digital switchover filters (45, 46) are connected at the output end to a summing device (52).

6. Codec circuit according to one of the preceding Claims 1 to 5, **characterized in that** the digital switchover filters (45, 46) are filters of the seventh order.

7. Codec circuit according to one of the preceding Claims 1 to 6, **characterized in that** the transmission and reception signal is a PCM signal.

8. Method for increasing the data transmission rate in a modem data transmission having the following steps:
a) the signals transmitted by a Codec circuit on a transmission signal path or received on a reception signal path are acquired;
b) it is detected whether the acquired signals are modem signals,
**characterized in that**
c) the filter bandwidths of digital filters which are provided in the transmission and reception signal path of the Codec circuit are increased if the acquired signals are detected as being modem signals, and as a function of the type of modem from which the modem signal originates.

9. Method according to Claim 8, **characterized in that** a modem signal detection device (31) detects a modem signal by acquiring an initial signal tone with a predetermined signal frequency at the start of the modem transmission.

## Revendications

1. Circuit codeur/décodeur destiné à augmenter la vitesse de transmission de données dans le cas d'une transmission par modem, lequel circuit codeur/décodeur comporte :
(a) un chemin de signal d'émission,
(b) un chemin de signal de réception, et
(c) un dispositif de détection de signal de modem (3 1 ) destiné à détecter si un signal d'émission émis dans le chemin de signal d'émission ou un signal de réception reçu dans le chemin de signal de réception est un signal de modem,
**caractérisé en ce que**
(d) un filtre d'émission numérique programmable (13) est prévu dans le chemin de signal d'émission du circuit codeur/décodeur,
(e) un filtre de réception numérique programmable (22) est prévu dans le chemin de signal d'émission du circuit codeur/décodeur,
(f) les filtres numériques programmables (13, 22) contenant chacun un premier filtre numérique commutable (45) de faible largeur de bande de filtrage et une pluralité de filtres numériques commutables (46) de largeur de bande de filtrage majorée, et
(g) le dispositif de détection de signal de modem (31) est réalisé de telle sorte que, en cas de détection d'un signal de modem, les filtres numériques programmables (13, 22) commutent au moyen d'un premier dispositif de commutation commandé (42) du premier filtre numérique commutable (45) de faible largeur de bande de filtrage en un filtre numérique commutable de la pluralité de filtres numériques commutables (46) de largeur de bande de filtrage majorée en fonction du type du modem à l'origine du signal de modem.

2. Circuit codeur/décodeur selon la revendication 1, **caractérisé en ce que** les filtres numériques programmables (13, 22) sont des filtres passe-bande présentant une fréquence de coupure inférieure et une fréquence de coupure supérieure.

3. Circuit codeur/décodeur selon la revendication 1 ou 2, **caractérisé en ce que** les coefficients de réglage des filtres numériques commutables (45, 46) sont mémorisables dans des mémoires de coefficients associées (49, 50).

4. Circuit codeur/décodeur selon la revendication 3, **caractérisé en ce que** les mémoires de coefficients sont reliées à un dispositif d'entrée de coefficients (57) via des lignes de réglage (55, 56).

5. Circuit codeur/décodeur selon l'une des revendications précédentes 1 à 4, **caractérisé en ce que** les filtres numériques commutables (45, 46) sont raccordés en sortie à un dispositif de sommation (53).

6. Circuit codeur/décodeur selon l'une des revendications précédentes 1 à 5, **caractérisé en ce que** les filtres numériques commutables (45, 46) sont des filtres de septième ordre.

7. Circuit codeur/décodeur selon l'une des revendications précédentes 1 à 6, **caractérisé en ce que** le signal d'émission et de réception est un signal MIC (PCM modulation par impulsions et codage).

8. Procédé d'augmentation de la vitesse de transmission des données dans une transmission de données par modem, lequel procédé comporte les étapes suivantes consistant à :
a) détecter les signaux envoyés par un circuit codeur/décodeur dans un chemin de signal d'émission ou les signaux reçus par un circuit codeur/décodeur dans un chemin de signal de réception,
b) détecter si les signaux détectés sont des signaux de modem,
**caractérisé en ce que**
c) les largeurs de bande de filtrage des filtres numériques, qui sont prévus dans le chemin de signal d'émission et de réception du circuit codeur/décodeur, sont majorées lorsque les signaux détectés sont des signaux de modem en fonction du type du modem à l'origine du signal de modem.

9. Procédé selon la revendication 8, **caractérisé en ce qu'**un dispositif (31) de détection de signal de modem détecte un signal de modem en détectant une tonalité de signal initiale d'une fréquence de signal prédéterminée, au début de la transmission par modem.
